# EUROPÄISCHE PATENTSCHRIFT

(11) **EP 0 386 656 B1**
(45) Veröffentlichungstag und Bekanntmachung des Hinweises auf die Patenterteilung: **28.12.1994**
(21) Anmeldenummer: 90104103.8
(22) Anmeldetag: 02.03.1990
(51) Int. Cl.: B29C 33/60, B29K 75/00

(54) **Verwendung eines wasser- und lösungsmittelfreien Trennmittels für die Polyurethanverschäumung**
Use of a dry and solvent-free release agent for polyurethane foaming
Utilisation d'un agent de démoulage sans eau et sans solvant pour le moussage de polyuréthane

(30) Priorität: 07.03.1989 DE 3907235
(43) Veröffentlichungstag der Anmeldung: 12.09.1990
(73) Patentinhaber: AIR PRODUCTS GMBH, D-45527 Hattingen (DE)
(72) Erfinder: Krug, William, D-6900 Heidelberg (DE); Fischer, Wolfgang, Dr. Dipl.-Chem., D-6942 Mörlenbach (DE)
(74) Vertreter: UEXKÜLL & STOLBERG

(56) Entgegenhaltungen:
- EP-A- 0 320 833
- DE-A- 2 111 256
- DE-A- 2 505 061
- Römpps Chemie Lexikon, 8. Auflage, 1987, Seite 3280, Franckh'sche Velagshandlung Stuttgart

## Beschreibung

Die Erfindung betrifft die Verwendung von polymeren Polyenen in einem Trennmittel zur Verwendung bei der Herstellung von Gegenständen aus Polyurethanschaum.

Die Herstellung von Gegenständen aus Polyurethanschaum erfolgt in Formen und kann nach den verschiedensten, aus dem Stand der Technik bekannten Verfahren erfolgen (vgl. z.B. die ausführlichen Erläuterungen in den europäischen Patentanmeldungen 164 501, 223 233 und 272 629). Vor dem Eintrag der Polyol-/Isocyanatkomponenten wird auf die Oberfläche des formgebenden Werkzeugs ein Trennmittel aufgebracht, das ein Festkleben des ausreagierten Polyurethanschaumgegenstands im Formwerkzeug verhindern soll. Solche Trennmittel bestehen aus trennwirksamen Substanzen und Additiven, die in gelöster, suspendierter, dispergierter oder emulgierter Form in Lösungsmitteln oder Wasser vorliegen (vgl. die Erläuterungen in den bereits oben genannten europäischen Patentanmeldungen). Ein derartiges wäßriges Trennmittel ist in EP-A-0 320 833 beschrieben und dadurch gekennzeichnet, daß es als trennwirksame Substanz zumindest zum Teil einen oder mehrere ungesättigte oligomere oder polymere Kohlenwasserstoffe mit Molekulargewichten von mindestens 500 und Jodzahlen von mindestens 60 enthält. Bevorzugt wird flüssiges Polybutadien mit einem Molekulargewicht von etwa 3000 und einer Jodzahl von ca. 450 eingesetzt, wobei der Wassergehalt der beschriebenen Trennmittel bei 74 bzw. 76 Gew.-% liegt. Das Lösungsmittel oder das Wasser dienen als Verdünner und Träger, um den Auftrag des Trennmittels mit den bekannten Sprühtechniken und die Ausbildung eines dünnen, homogenen Trennmittelfilms auf der Werkzeugoberfläche zu ermöglichen. Solche Sprühtechniken sind unterschiedlich, ohne oder mit Luft arbeitende Verfahren, wobei das Sprühgut bei Raumtemperatur oder im erwärmten Zustand versprüht wird. Bekannt ist ferner die Anwendung von erwärmter Zerstäuberluft.

Es ist bekannt, daß sowohl Trennmittel auf Lösungsmittelbasis als auch auf wäßriger Basis erhebliche Unzulänglichkeiten aufweisen. So muß das Lösungsmittel oder das Wasser nach dem Trennmittelauftrag aus dem sich bildenden Trennmittelfilm verdunsten, um die nachfolgende Isocyanat-/Polyol-Reaktion nicht zu stören. Lösungsmittel verdunsten zwar schnell, sind aber feuergefährlich, gesundheitsschädlich und umweltbelastend. Ferner ist ihr Einsatz mit einem prozentualen Anteil von bis zu 97% als höchst unwirtschaftlich einzustufen, da sie zur Funktion des Trennmittels keinen nennenswerten Beitrag leisten. Wasser weist diese Nachteile nicht auf, verdunstet aber schlecht und schränkt somit die Anwendungsmöglichkeiten eines Trennmittels aufgrund betrieblicher Parameter erheblich ein (vgl. wiederum die Erläuterungen in den oben genannten europäischen Patentanmeldungen). Ein weiterer großer Nachteil bei der Verwendung von Trennmitteln auf wäßriger Basis ist in der Bildung von Polyharnstoffen zu sehen, welche durch Nebenreaktionen des Isocyanats mit dem Restwasseranteil des Trennmittelfilms entstehen. Diese Polymere verursachen auf den Werkzeugoberflächen festhaftende reaktive Beläge, welche sehr schwer entfernbar sind und in zunehmendem Maße die Trennwirkung negativ beeinflussen. Kostenintensive Reinigungsverfahren sind die Folge.

Der vorliegenden Erfindung liegt dementsprechend die Aufgabe zugrunde, ein neues Trennmittel vorzuschlagen, das weder nennenswerte Mengen Wasser noch Lösungsmittel enthält und dadurch die mit den bekannten, Wasser und/oder Lösungsmittel enthaltenden Trennmitteln verbundenen Nachteile vermeidet.

Zur Lösung dieser Aufgabe wird die Verwendung von einem oder mehreren polymeren Polyenen als Hauptbestandteil in einem wasser- und lösungsmittelfreien Trennmittel zur Verwendung bei der Herstellung von Gegenständen aus Polyurethanschaum vorgeschlagen.

Es wurde überraschend gefunden, daß Polyene gegenüber Isocyanaten einen hohen Grad an Inertheit aufweisen. Selbst Beimischungen von beispielsweise 4 bis 5% eines Polyens in die A-Komponente eines empfindlichen Kaltweichschaum-Systems bewirkten beim sich anschließenden Reaktionsprozeß keine Schaumstörungen.

Bedingt durch dieses Verhalten besitzen Polyene in gewissem Umfang selbst trennwirksame Eigenschaften, so daß sie als Trägermaterial für andere bekannte Trennmittelzusätze, aber auch selbst als trennwirkungsfördernde Substanz dienen können.

Aufgrund ihrer weitgehenden ökologischen und toxikologischen Unbedenklichkeit stellen Polyene nicht nur eine wertvolle Alternative zu den bislang verwendeten Lösungsmitteln dar, sondern tragen aufgrund ihrer Trennwirksamkeit auch zu einer drastischen Reduzierung des Trennmittelverbrauches sowie zur Verringerung der Aerosolbildung am Arbeitsplatz bei.

Ein weiterer Vorteil der erfindungsgemäßen Trennmittel ist in ihrem hohen spezifischen elektrischen Widerstand zu sehen, welcher die besonders günstige Aufbringung solcher Trennmittel auf Polyurethanschaumwerkzeugoberflächen nicht nur mittels herkömmlicher Sprühtechniken sondern auch mittels elektrostatischer Sprühverfahren (siehe z.B. DE-A 21 11 256) zuläßt.

Bei Verwendung der üblichen Sprühtechniken in Kombination mit einer elektrostatischen Behandlung erfahren die Trennmittelteilchen beim Passieren der Austrittsdüse eine elektrostatische Aufladung, wodurch sie einerseits nochmals zerrissen werden, was zu einer besseren Vernebelung (feinere Verteilung) führt, und zum anderen durch die entgegengesetzten Ladungen (Partikel - Werkzeug) sehr homogene Belegungen auf der Formwerkzeugoberfläche erzielt werden. Dieser Effekt ist aus der Lackiertechnik im Prinzip bekannt, wo ebenfalls zum Teil stark fädenziehende viskose Produkte verarbeitet werden müssen. Dementsprechend können aus der Lackiertechnik bekannte elektrostatische, luftzerstäubende Sprühpistolen erfindungsgemäß besonders vorteilhaft eingesetzt werden und führen zu homogenen dünnen Trennmittelfilmen. Mit den genannten Vorteilen, die sich aus der elektrostatischen Sprühtechnik ableiten, ergibt sich eine nochmalige Reduzierung des Trennmittelverbrauchs.

Die für das erfindungsgemäße Trennmittel geeigneten Polyene haben eine sprühfähige Konsistenz, welche erforderlichenfalls durch Erwärmen erreicht wird. Gut geeignet sind flüssige Polybutadiene, wobei Poly-1.4-cis-butadien bevorzugt ist. Dabei ist es von Vorteil, wenn der Vinylgruppenanteil des Poly-1.4-cis-butadiens bei etwa 1% liegt. Diese haben bei 20^{o}C eine Viskosität von etwa 3000 mPa·s.

Je nach verwendetem Polyen ist es erforderlich bzw. vorteilhaft, daß das erfindungsgemäße Trennmittel einen Konsistenzregler enthält. Hierfür eignen sich vorwiegend übliche Fette, Wachse und Öle, welche gleichzeitig die Trennwirksamkeit erhöhen. Aufgrund der vorhandenen Doppelbindungen der erfindungsgemäß verwendeten Polyene ist es außerdem von Vorteil, wenn das Trennmittel ein Antioxidans enthält. Bewährt haben sich für diesen Zweck insbesondere alkylierte Phenole, z.B. Nonyl-phenole.

Das erfindungsgemäße Trennmittel kann außer diesen Substanzen auch andere herkömmliche trennwirksame Substanzen enthalten, wobei sich deren Menge nach der Verträglichkeit mit den übrigen Bestandteilen des Trennmittels und nach den Verarbeitungsanforderungen richtet. Zu diesen herkömmlichen trennwirksamen Substanzen, für die die Polyene als Träger dienen, gehören Silikonverbidungen, Fettsäureamide, und Fettsäureester (vgl. z.B. die oben genannten europäischen Patentanmeldungen).

Darüber hinaus kann das erfindungsgemäße Trennmittel selbstverständlich übliche Zusätze wie Beschleuniger, und Schaumstabilisatoren enthalten.

Es ist ein wesentliches Merkmal des erfindungsgemäßen Trennmittels, daß es frei von Wasser und organischen Lösungsmitteln ist. Es kann hergestellt werden, indem alle Bestandteile zusammengegeben und unter Bildung einer homogenen Mischung gründlich durchgemischt werden, wobei erforderlichenfalls erwärmt wird.

Es ist überraschend, daß das erfindungsgemäße Trennmittel auch ohne die Mitwirkung der bekannten Verdünner oder Träger wie Wasser oder Lösungsmittel einen ausreichend gleichmäßigen und vollständig homogenen Trennmittelfilm auf der Werkzeugoberfläche bildet. Aufgrund der beschriebenen günstigen Eigenschaften der eingesetzten Polyene genügt es im allgemeinen, wenn 10 bis 15 g/m² und insbesondere etwa 12 g/m² des erfindungsgemäßen Trennmittels aufgebracht werden.

### Beispiel 1

In einem 2 l Aluminiumversuchswerkzeug wurden Prüfkörper unter Verwendung eines im Handel erhältlichen Kaltweichschaumsystems geschäumt. Der Trennmittelauftrag erfolgte mittels eines Hochdruck-Airlessgerätes, wobei der Düsendurchmesser 0,08 mm betrug. Das verwendete Trennmittel wurde auf 80^{o}C erwärmt und hatte folgende Zusammensetzung:

| | |
|---|---|
| Amin-Beschleuniger | 3 Gew.% |
| Silikonstabilisator | 3 Gew.% |
| Nonyl-phenol (Antioxidans) | 4 Gew.% |
| Niedermolekulares Polyethylenwachs (Konsistenzregler) | 5 Gew.% |
| Poly-1.4-cis-butadien | 85 Gew.% |

Es wurden leicht entformbare, von Oberflächenstörungen freie Schaumkörper erhalten.

### Beispiel 2

Das in Beispiel 1 beschriebene Trennmittel wurde auf etwa 80^{o}C aufgeheizt und dann mittels einer Sprühpistole mit einer luftzerstäubenden Rundstrahldüse mit Elektrostatik auf die Oberfläche des Formwerkzeugs aufgetragen. Es ergab sich, daß durch Verwendung dieser Vorrichtung ganz besonders dünne, homogene Trennmittelfilme erzeugt wurden. Die hergestellten Schaumkörper waren in jeder Beziehung einwandfrei.

## Patentansprüche

1. Verwendung von einem oder mehreren polymeren Polyenen als Hauptbestandteil in einem wasser- und lösungsmittelfreien Trennmittel zur Verwendung bei der Herstellung von Gegenständen aus Polyurethanschaum.

2. Verwendung nach Anspruch 1, bei der das Trennmittel 50 bis 95 Gew.% und vorzugsweise 80 bis 85 Gew.% Polyene enthält.

3. Verwendung nach Anspruch 1 oder 2, bei der das Polyen ein Polybutadien ist.

4. Verwendung nach Anspruch 3, bei der das Polybutadien Poly-1,4-cis-butadien und vorzugsweise Poly-1,4-cis-butadien mit einem Vinylgruppenanteil von etwa 1 Gew.% ist.

5. Verwendung nach einem der vorangehenden Ansprüche, bei der das Trennmittel einen Konsistenzregler enthält.

6. Verwendung nach einem der vorangehenden Ansprüche, bei der das Trennmittel ein Antioxidans enthält.

7. Verwendung nach einem der vorangehenden Ansprüche, bei der das Trennmittel Beschleuniger und/oder Stabilisatoren enthält.

8. Verwendung nach einem der vorangehenden Ansprüche, bei der das Trennmittel zusätzlich zu dem oder den Polyenen herkömmliche trennwirksame Substanzen enthält.

9. Verwendung nach einem der vorangehenden Ansprüche, bei der 10 bis 15 g Trennmittel pro m² Oberfläche des Formwerkzeuges angewendet werden.

10. Verwendung nach einem der vorangehenden Ansprüche, bei der das Trennmittel vernebelt und auf die Formwerkzeugoberfläche aufgesprüht wird.

11. Verwendung nach einem der vorangehenden Ansprüche, bei der das Trennmittel mit einer mit Elektrostatik ausgerüsteten Vorrichtung, vorzugsweise einer elektrostatischen, luftzerstäubenden Sprühpistole versprüht oder vernebelt wird und dadurch die Trennmittelpartikel beim Passieren der Austrittsdüse elektrostatisch aufgeladen werden.

## Claims

1. Use of one or more polymeric polyenes as main constituent in a water- and solvent-free release agent for use during the manufacture of objects made from polyurethane foam.

2. Use according to claim 1, in which the release agent contains 50 to 95 wt.% and preferably 80 to 85 wt.% polyenes.

3. Use according to claim 1 or 2 in which the polyene is a polybutadiene.

4. Use according to claim 3 in which the polybutadiene is poly-1,4-cis-butadiene and preferably poly-1,4-cis-butadiene with a vinyl group proportion of approximately 1 wt.%.

5. Use according to one of the preceding claims in which the release agent contains a consistency regulator.

6. Use according to one of the preceding claims in which the release agent contains an anti-oxidant.

7. Use according to one of the preceding claims in which the release agent contains accelerators and/or stabilisers.

8. Use according to one of the preceding claims in which the release agent contains, in addition to the polyene or polyenes, traditional release-effecting substances.

9. Use according to one of the preceding claims in which 10 to 15 g release agent are used per m² of surface of the mould.

10. Use according to one of the preceding claims in which the release agent is atomized and sprayed onto the mould surface.

11. Use according to one of the preceding claims in which the release agent is sprayed or atomized using a device equipped with electrostatics, preferably an electrostatic, air-atomizing spray gun and the release agent particles are thereby electrostatically charged on passing through the discharge nozzle.

## Revendications

1. Utilisation d'un ou de plusieurs polyènes polymères comme constituant principal dans un agent de démoulage sans eau et sans solvant destiné à servir lors de la fabrication d'objets en mousse de polyuréthanne.

2. Utilisation selon la revendication 1, dans laquelle l'agent de démoulage contient 50 à 95 %, de préférence 80 à 85 % en poids de polyènes.

3. Utilisation selon la revendication 1 ou 2, dans laquelle le polyène est un polybutadiène.

4. Utilisation selon la revendication 3, dans laquelle le polybutadiène est un poly-1,4-cis-butadiène, et de préférence un poly-1,4-cis-butadiène avec un teneur en groupes vinyles d'environ 1% en poids.

5. Utilisation selon l'une des revendications précédentes, dans laquelle l'agent de démoulage contient un régulateur de consistance.

6. Utilisation selon l'une des revendications précédentes, dans laquelle l'agent de démoulage contient un antioxydant.

7. Utilisation selon l'une des revendications précédentes, dans laquelle l'agent de démoulage contient des accélérateurs et/ou des stabilisateurs.

8. Utilisation selon l'une des revendications précédentes, dans laquelle l'agent de démoulage contient, en plus du ou des polyènes, des substances classiques à pouvoir séparateur.

9. Utilisation selon l'une des revendications précédentes, dans laquelle on utilise 10 à 15 g d'agent de démoulage par m² de surface du moule.

10. Utilisation selon l'une des revendications précédentes, dans laquelle l'agent de démoulage est nébulisé et pulvérisé sur la surface de l'outil de moulage.

11. Utilisation selon l'une des revendications précédentes, dans laquelle l'agent de démoulage est pulvérisé et nébulisé au moyen d'un dispositif équipé électrostatiquement, de préférence au moyen d'un pistolet électrostatique à vaporisation d'air, ce qui permet aux particules de l'agent de démoulage d'être chargées électrostatiquement au cours de leur passage dans la buse de vaporisation.
